# EUROPEAN PATENT SPECIFICATION

(11) **EP 0 519 540 B1**
(45) Date of publication and mention of the grant of the patent: **13.03.1996**
(21) Application number: 92201570.6
(22) Date of filing: 02.06.1992
(51) Int. Cl.: A22C 7/00

(54) **Automatic device for loading and unloading deboned raw hams into and from their shaping moulds**
Automatische Vorrichtung zum Beladen und Entladen von entbeinten Schinken aus ihrer Herstellungsform
Dispositif automatique pour le chargement et déchargement de jambons désossés de leur moule

(30) Priority: 20.06.1991 IT RE910039
(43) Date of publication of application: 23.12.1992
(73) Proprietor: MACCHINE SONCINI ALBERTO S.p.A., I-43013 Langhirano (Parma) (IT)
(72) Inventor: Soncini, Alberto, I-43013 Langhirano (Parma) (IT)
(74) Representative: Corradini, Corrado

(56) References cited:
- EP-A- 0 057 478
- EP-A- 0 373 844
- DE-A- 2 843 388
- US-A- 3 576 162

## Description

This invention relates generally to the processing of deboned raw hams, and more particularly to the pressing and shaping of said deboned raw hams.

As is well known, after deboning, the raw hams undergo sewing of the longitudinal cut necessary for removing the bone, after which they are inserted into and compressed within moulds comprising a die and punch which mutually cooperate, the former comprising a suitable extractor or expeller.

An example is shown in EP-A-57478 which discloses a mould provided with an oblong impression for receiving the ham to be shaped, a slidable punch to be inserted into said impression to cause the ham to assume the shape of said impression, and an extractor for extracting the shaped ham.

The known main purpose of said compression is to perfectly deaerate the meat mass to prevent the presence of air which could lead to fermentation and the like, the secondary purpose being to give the meat mass the characteristic shape (substantially pear-like) of deboned raw ham.

For the purposes of the present invention it is irrelevant whether the shaping mould is of the refrigerated type or not, and hence the respective auxiliary equipment will not be described.

The main object of the present invention is to automate the loading and unloading of said shaping moulds, these operations having been performed manually up to the present time, such operations consequently being repetitive and relatively very heavy for the personnel involved, and involving cost due to the necessary presence of such personnel.

The invention provides a device which attains the aforesaid object within the context of a simple and rational construction.

The device according to the invention comprises a conveyor line to be aligned with the major axis of the impression in the die of a shaping mould, and on which the raw hams (deboned and sewn) to be shaped are laid with their leg pointing forwards and advanced so that they become inserted via their leg, one after another, into the narrow part of said impression.

Preferably the hams are laid on said conveyor line with that cavity which contained the knuckle facing upwards.

At the downstream end of the conveyor line there is a profiled member both for retaining the hams to be placed in the mould and for thrusting those already shaped, it being able to assume a rest position in which it is situated outside the path of the hams, and a working position in which during shaping it can be aligned with the peripheral edge of the wide part of the matrix impression so as to guide the meat mass thrust by the punch during its lowering, and to slide along the mouth of the impression to remove the ham when shaped, and raised by the extractor.

Preferably, at the end of forward travel of said profiled retention and unloading member for the hams there is provided a conveyor for their removal.

By virtue of the aforesaid means all the objects of the invention are attained in that the hams are loaded and unloaded completely automatically.

The characteristics and constructional merits of the invention will be apparent from the detailed description given hereinafter with reference to the accompanying figures, which show a preferred embodiment thereof by way of example.
Figure 1 is a side elevational view of the invention with parts cut away, after loading a ham into the die of a shaping mould.
Figure 2 is a section on the line II-II of Figure 3.
Figures 3, 4, 5 and 6 are partly sectional side views showing the most significant positions of the device according to the invention.

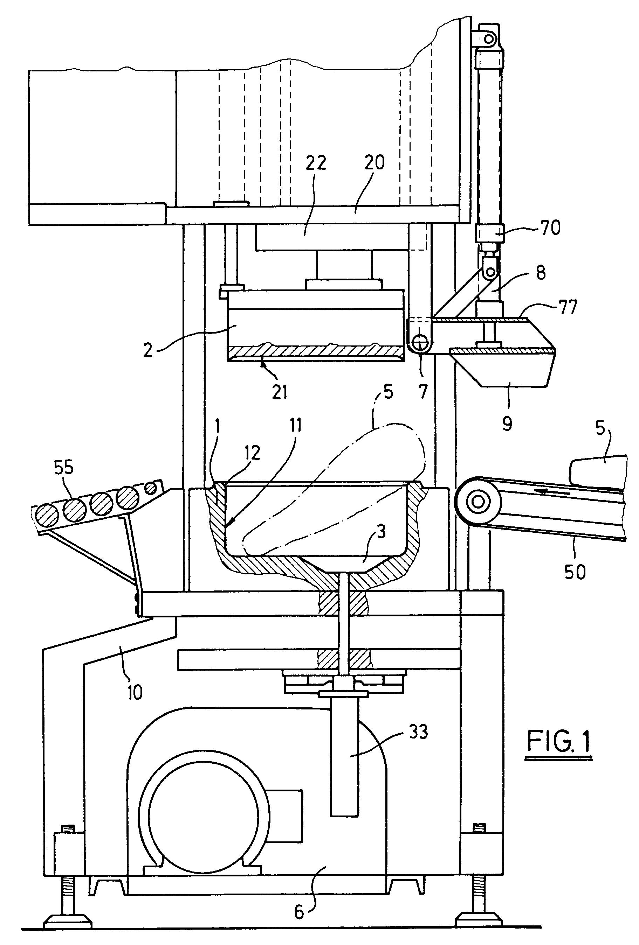

Said figures, and in particular Figure 1, show a shaping mould comprising a die 1 and a punch 2, the die 1 being positioned on a framework 10 and the punch 2 being slidingly mounted on an overlying structure 20.

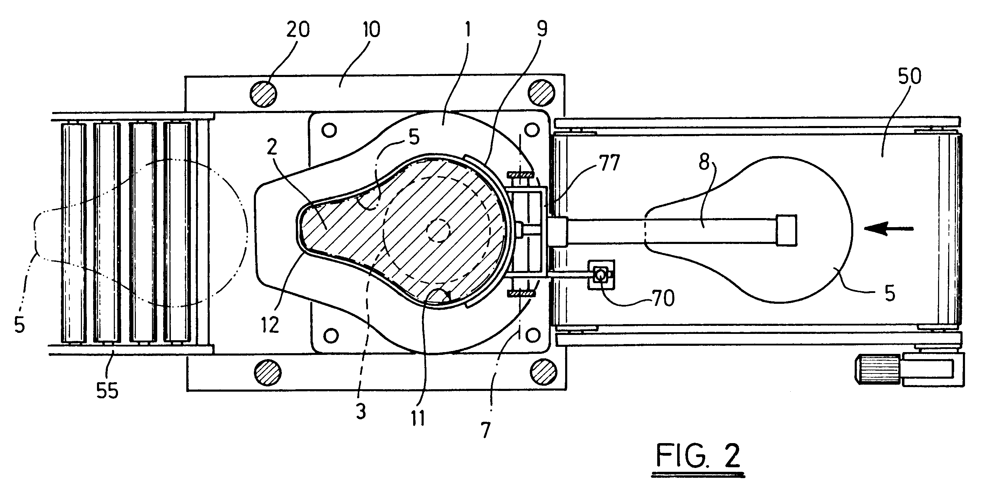

The die 1 contains an impression 11, the plan shape of which has the characteristic form (pear-shaped oblong) of a deboned raw ham (see Figure 2), and the base of which carries a sunken extractor disc 3. Said base joins smoothly into the side wall of the impression 11, the mouth of this latter being provided with a small perimetral bevel 12.

Said extractor 3 is caused to slide vertically by an underlying cylinder-piston unit 33 in order to occupy a lowered position in which its upper face is coplanar with the base of the impression 11 (see Figures 1, 3, 4, 6), and a raised position in which said face is coplanar with the mouth of the impression 11,

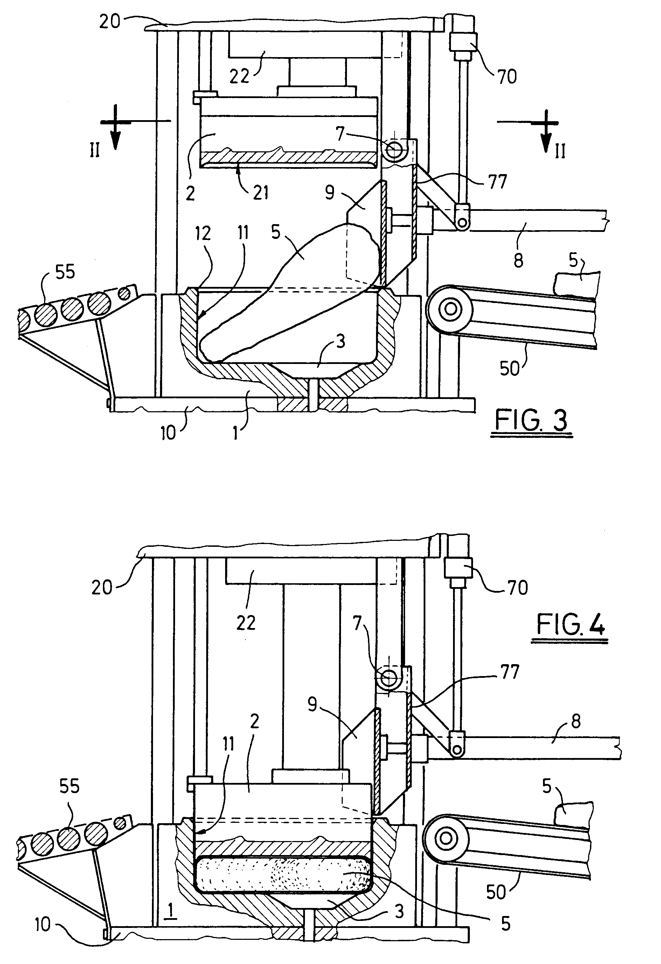

The punch 2 can enter said impression 1 practically as an exact fit (Figures 2, 4), the edge of its lower face being slightly raised as can be seen at 21 (Figures 1, 3).

Said punch 2 is caused to slide vertically by an overlying cylinder-piston unit 22 which can thrust the punch 2 with such a force as to confer a substantially flat shape on the deboned (and sewn) raw hams (Figures 4, 5, 6).

Although not shown, it should be noted that suitable channels can be provided in said die 1 and/or punch 2 for the passage of a cryogenic fluid circulated by a refrigeration system 6 (Figure 1) for maintaining the active surfaces of the die 1 and punch 2 at a temperature such as to allow total removal of the heat generated in compressing the meat mass.

However the type of mould (refrigerated or not) is irrelevant in that the means according to the invention relate to the loading and unloading of shaping moulds for raw hams, as stated in the introduction.

To load the hams there is provided a substantially horizontal conveyor 50 which is aligned with the major axis of the plan shape of the impression 11, and is situated at that end of this latter containing the wide part.

In the illustrated example the conveyor 50 is of belt type, but it can be of other types, for example of mesh or roller type. The upper surface of the conveyor 50 is positioned substantially at the level of the upper face of the die 1, the conveyor 50 being driven with intermittent motion, its stoppage being determined by a convenient sensor (not shown) each time a ham 5 has at lest partly entered the impression 11 as shown in Figure 1.

The hams 5 advance with their leg pointing forwards, and are laid on the conveyor 50 with that cavity which contained the knuckle preferably facing upwards.

It should be noted that the distance between the downstream end of the conveyor 50 and the upstream part of the impression 11 is such that the arriving ham 5 enters this latter part naturally, before its wide portion has passed beyond the downstream end of the conveyor 50.

A frame 77 is hinged on a transverse horizontal axis to the structure 20 immediately downstream of the conveyor 50, and is rotated by a respective cylinder-piston unit 70.

To the centre of said frame 77 there is fixed the body of a cylinder-piston unit 8, the rod of which passes through the frame 77, beyond which it carries a member for retaining the hams to be shaped and for unloading those which have already been shaped.

Specifically, in the illustrated embodiment said member 9 consists of an arched plate, or, more generally, of a concave body the active surface of which consists of a profiled surface portion.

What is important is that when the the member 9 is rotated downwards (Figure 2) from its rest position shown in Figure 1, the edge of its concave part becomes aligned with the upper edge of the impression 11.

As can be seen in Figure 2, said member 9 is symmetrical about the vertical plane passing through the major axis of the impression 11, the lower edge of said member 9 being arranged, when this latter is lowered, to lie a short distance from the upper face of the die 1 (Figures 3 to 6).

A conveyor 55 is provided for removing the shaped hams.

In the illustrated embodiment this conveyor consists of an idle roller table inclined downwards in the downstream direction, however this conveyor can be of any other known type, such as of motorized roller or belt type. This latter type of conveyor is particularly convenient if a bank of side-by-side shaping moulds 1-2 is to be served, each of them being provided with a respective arrival conveyor 50 and all of them being unloaded onto said latter type of conveyor, which would be positioned transversely to the series of conveyors 50, and hence parallel to the series of moulds 1-2.

The described device operates as follows.
As soon as a ham 5 reaches the die (Figure 1), with at least its narrow part received within the impression 11, the conveyor 50 stops and the member 9 receives the command to descend, to assume the position shown in Figures 2 and 3 (outside the path of the punch 2).

In this manner the member 9 pushes the meat mass forwards to position the wide part of the ham 5 aligned with the corresponding underlying wide part of the impression 11.

The punch 2 is then lowered to press the ham 5 into the impression 11 and to also itself enter the impression (Figure 4), where it remains (constantly urged downwards) for the time necessary to achieve complete deaeration and stable shaping of the ham.

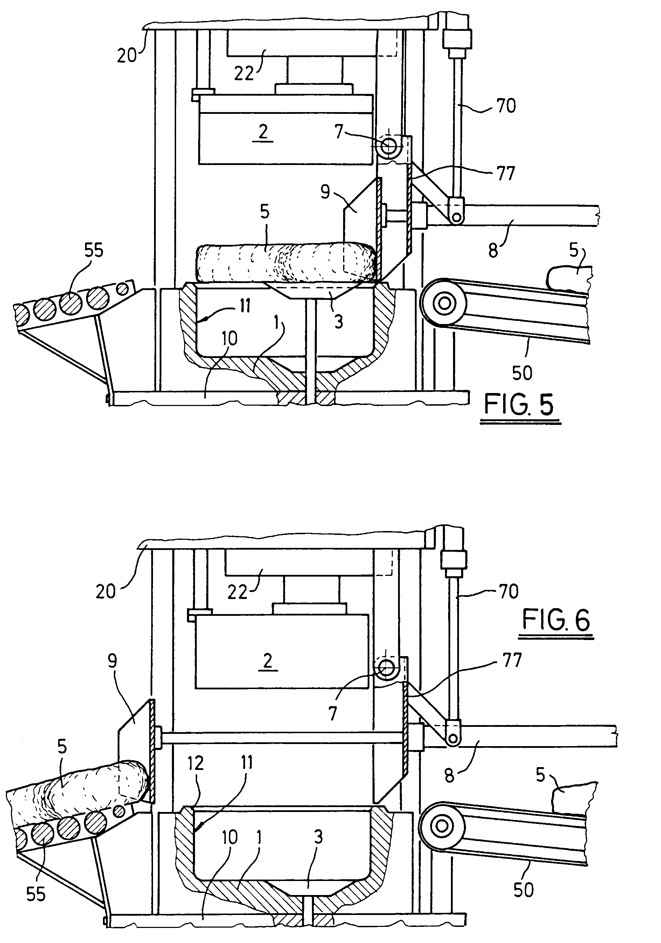

The punch 2 is then raised, after which the extractor 3 is raised with the shaped ham 5 resting on it (Figure 5), the member 9 then receiving the command to advance (Figure 6) and discharge the ham 5 onto the removal conveyor 55.

After this the entire system is repositioned to the position shown in Figure 1 and the described cycle is repeated identically for the next ham fed by the conveyor 50.

The merits and advantages of the invention are clear from the aforegoing and from an examination of the accompanying figures.

The invention is not limited to the single embodiment described and illustrated, but covers all technical equivalents of the described means and their combinations, if implemented within the context of the following claims.

## Claims

1. A device for loading and unloading deboned raw hams into and from respective shaping moulds the device comprising moulds with a die (1) provided with an oblong impression (11) for receiving the ham (5) to be shaped, and a slidable punch (2) to be inserted into said impression to cause the ham to assume the shape of said impression, this latter being provided lowerly with an extractor (3) for extracting the shaped ham, characterised by comprising an intermittently movable conveyor line (50) on which the hams to be shaped can be laid, and a profiled retention and thrusting member for the hams which is provided between said conveyor line and said impression and is able to assume a rest configuration in which it is situated outside the path of the arriving hams, and a working configuration in which it is aligned with the upstream edge of the impression, to guide the meat thrust by the punch during its lowering and is able to slide relative to the impression, with simultaneous discharge of the shaped ham when raised by the extractor (3).

2. A device as claimed in claim 1, characterised in that said profiled member (9) comprises a concave shaped surface portion having its lower horizontal edge aligned with the peripheral edge of the upstream portion of said impression and positioned a short distance from it, when in its working position.

3. A device as claimed in the preceding claims, characterised in that said profiled member (9) is positioned on a frame (77) arranged to rotate about an axis perpendicular to the conveyor axis, between said frame (77) and member (9) there being provided means for sliding the profiled member (9) parallel to said axis when said member is in said working position.

4. A device as claimed in claim 1, characterised in that said impression has its major axis parallel to the axis of the conveyor line (50) and has its wide part facing this latter.

5. A device as claimed in claim 1, characterised by comprising a second conveyor (55) for collecting and removing the shaped hams, it being positioned on that side of the die opposite the side occupied by said conveyor line (50).

## Patentansprüche

1. Eine Vorrichtung zum Laden und Entladen von rohen, entbeinten Schinken in die betreffenden Formen bzw. von den betreffenden Formen; in diese Vorrichtung sind Formen mit einer Matrize (1) integriert, die mit einem länglichen Formraum (11) zur Aufnahme des zu formenden Schinkens (5) und mit einem verschiebbaren Stempel versehen sind, der in den vorab genannten Formraum eingeführt wird, damit der Schinken die Form des Formraumes annimmt. Der Formraum ist am unteren Teil mit einem Auszieher (3) zur Entnahme des geformten Schinkens versehen. Am Auszieher ist ein Förderband mit getakteter Bewegung (50) für den Transport der zu formenden Schinken sowie ein Profilelement, das die Schinken hält und schiebt und zwischen dem Förderband und dem Formraum angebracht ist, angebaut. Dieses Profilelement nimmt zwei Konfigurationen an: eine Ruhestellung, in der es außerhalb der Einlaufstrecke des Schinkens steht und eine Betriebsstellung, in der es zum Rand, der sich vor dem Formraum befindet, ausgerichtet ist, um das vom Stempel während seiner Senkphase geschobene Fleisch zu führen und in der Lage ist, in Entsprechung des Formraumes zu gleiten, wobei der geformte Schinken beim Aufwärtshub des Ausziehers (3) zugleich entladen wird.

2. Eine Vorrichtung wie jene unter Punkt 1 des Patentanspruches beschriebene, dadurch gekennzeichnet, daß das vorab genannte Profilelement (9) einen konkaven Oberflächenteil enthält, dessen unterer Horizontalrand zum peripheren Rand des Teiles vor dem obengenannten Formraum ausgerichet ist und in Betriebsstellung sich in der Nähe dieses Randes befindet.

3. Eine Vorrichtung wie jene unter Punkt 1 des Patentanspruches beschriebene, dadurch gekennzeichnet, daß das vorab genannte Profilelement (9) auf einer Struktur (77) angebracht ist, die um eine zur Förderbandachse senkrechten Achse dreht; zwischen der genannten Struktur (77) und dem genannten Element (9) sind Gleitelemente vorgesehen, die das Profilelement (9) parallel zur vorab genannten Achse gleiten lassen, wenn sich das Profilelement in Betriebsstellung befindet.

4. Eine Vorrichtung wie jene unter Punkt 1 des Patentanspruches beschriebene, dadurch gekennzeichnet, daß die Hauptachse des obigen Formraums parallel zur Förderbandachse (50) verläuft und der breitere Teil des Formraums sich vor dem Förderband befindet.

5. Eine Vorrichtung wie jene unter Punkt 1 des Patentanspruches beschriebene, dadurch gekennzeichnet, daß sie ein zweites Förderband (55) eingebaut hat, auf dem die geformten Schinken gesammelt und abtransportiert werden, nachdem es auf der Matrizenseite positioniert ist, die sich gegenüber der vom obigen Förderband (50) belegten Seite befindet.

## Revendications

1. Dispositif pour le chargement de jambons crus désossés dans des moules de mise en forme et le déchargement de ces moules, le dispositif comprenant des moules avec une matrice (1) dans laquelle est prévue une forme en creux oblongue (11) pour recevoir le jambon (5) qui doit être conformé, un piston presseur susceptible de se déplacer en coulissement (2) de façon à être introduit dans ladite forme en creux pour obliger le jambon à prendre la forme de ladite forme en creux, cette dernière étant prévue, à sa partie basse, avec un extracteur (3) pour l'extraction du jambon conformé, ledit dispositif étant caractérisé en ce qu'il comprend une bande de convoyeur (50) qui se déplace de façon intermittente sur laquelle les jambons à conformer peuvent être couchés, et un organe profilé de retenue et de poussée pour les jambons, lequel organe est prévu entre ladite bande de convoyeur et ladite forme en creux et est susceptible de prendre une configuration de repos dans laquelle il est situé à l'extérieur du trajet d'arrivée des jambons, et une configuration de travail dans laquelle il est aligné avec le bord supérieur de la forme en creux de façon à guider la viande poussée par le piston presseur lors de son abaissement, ledit organe étant susceptible de coulisser par rapport à ladite forme en creux, tout en déchargeant simultanément le jambon conformé lorsqu'il a été soulevé par l'extracteur (3).

2. Dispositif selon la revendication 1, caractérisé en ce que ledit organe profilé (9) comprend une partie de surface de forme concave ayant son bord horizontal inférieur aligné avec le bord périphérique de la partie supérieure de ladite forme en creux et positionné à une courte distance d'elle lorsqu'il est dans sa position de travail.

3. Dispositif selon l'une des revendications précédentes, caractérisé en ce que ledit organe profilé (9) est positionné sur un cadre (77) disposé de façon à tourner autour d'un axe perpendiculaire à l'axe du convoyeur, des moyens étant prévus entre ledit cadre (77) et ledit organe (9) pour faire coulisser l'organe profilé (9) parallèlement audit axe lorsque ledit organe est dans sa position précitée de travail.

4. Dispositif selon la revendication 1, caractérisé en ce que ladite forme en creux a son axe principal parallèle à l'axe de la bande de convoyeur (50) et a sa partie large qui fait face à cette dernière.

5. Dispositif selon la revendication 1, caractérisé en ce qu'il comprend un second convoyeur (55) pour recueillir et enlever les jambons conformés, ce convoyeur étant positionné sur le côté de la matrice qui est opposé à celui occupé par ladite bande de convoyeur (50).
